# EUROPÄISCHE PATENTSCHRIFT

(11) **EP 0 746 645 B1**
(45) Veröffentlichungstag und Bekanntmachung des Hinweises auf die Patenterteilung: **05.05.2010**
(21) Anmeldenummer: 95909714.8
(22) Anmeldetag: 13.02.1995
(51) Int. Cl.: D03D 27/10, D03D 11/00

(54) **ABSTANDSGEWEBE**
SPACED FABRIC
TISSU A DEUX COUCHES ESPACEES

(30) Priorität: 23.02.1994 DE 4405772; 07.04.1994 DE 4411931
(43) Veröffentlichungstag der Anmeldung: 11.12.1996
(73) Patentinhaber: ZCL COMPOSITES INC, Edmonton, AB T6B 2Z6 (CA)
(72) Erfinder: BÖTTGER, Wolfgang, D-95361 Ködnitz (DE)
(74) Vertreter: Sparing Röhl Henseler Patentanwälte European Patent Attorneys
(86) Internationale Anmeldenummer: PCT/EP1995/000518
(87) Internationale Veröffentlichungsnummer: WO 1995/023251

(56) Entgegenhaltungen:
- EP-A- 0 299 308
- EP-A- 0 392 939
- WO-A-92/17661
- DE-A- 4 100 738
- DE-U- 9 007 289
- US-A- 3 013 588
- PATENT ABSTRACTS OF JAPAN vol. 18 no. 82 (C-1164) ,10.Februar 1994 & JP,A,05 287636 (ADVANCE KYODO KUMIAI) 2.November 1993,
- DATABASE WPI Week 9348 Derwent Publications Ltd., London, GB; AN 93-383645 & JP,A,05 287 679 (UNITIKA) , 2.November 1993

## Beschreibung

Die Erfindung betrifft ein Abstandsgewebe, insbesondere ein Veloursgewebe, mit einer ersten und einer zweiten Lage und verbindenden Polfäden. Weiter betrifft die Erfindung auch ein Bauteil auf Basis eines Abstandsgewebes, insbesondere auf Veloursgewebebasis, und ein Verfahren zur Ausbildung eines Bauteils auf Basis eines Abstandsgewebes.

Derartige Abstandsgewebe und hieraus durch Verharzen hergestellte Bauteile sind bereits in verschiedenen Ausführungsformen und für verschiedene Anwendungszwecke bekanntgeworden.

Zunächst ist zum Stand der Technik auf die EP-B1 299 308 zu verweisen. Weiter auch auf die DE-A1 41 00 738. Die dort beschriebenen Kettfäden sind jeweils notwendige Kettfäden. Würde einer der Kettfäden wegfallen, wäre das jeweilige Fach nicht geschlossen. Der Kettfaden, der zwischen den Lagen wechselt, ist notwendig, da ansonsten die Lagen nicht miteinander verbunden werden. Eine Anwendung eines solchen Gewebes bzw. eines danach hergestellten verharzten Bauteiles bei einem Bodenbelag ist weiter aus der EP-A2 475 000 bekannt. Die WO93/03235 beschreibt die Anwendung eines auf Basis eines solchen Gewebes hergestellten Bauteils im Hausbau. Weiter ist zum Stand der Technik etwa auf die DE-A1 39 02 940 und die eingetragenen Unterlagen der DE-GM 90 06 957, 90 07 289, 91 03 282, 89 02 259 und 89 03 440 zu verweisen.

Insbesondere bei einem Veloursgewebe, wie es aus der eingangs genannten EP-B1 299 308 bekannt ist, hat sich in verharzten Zustand die Ausgestaltung der auf die Polfäden, welche die Lagen des Mehrlagengewebes miteinander frei flottierend verbinden, zurückgehenden Zwischenelemente als sehr vorteilhaft herausgestellt. Die Zwischenelemente besitzen einerseits aufgrund der Verharzung einen sockelartigen Übergang in die obere bzw. untere Lage und sind darüber hinaus, bei 8-förmiger Verdrillung mittig, noch in der Regel durch die Verharzung miteinander verbunden, so dass sie vergleichsweise starr ausgebildet sind. Es besteht jedoch noch ein Bedürfnis, die Festigkeit solcher Bauteile zu erhöhen und ein hierfür geeignetes Abstandsgewebe anzugeben. Zwar läßt sich die Festigkeit durch den Harzanteil, der beim Verharzen im Gewebe verbleibt, steuern, jedoch nimmt hiermit auch zugleich das Gewicht eines solchermaßen hergestellten Bauteils jeweils entsprechend zu.

Hinsichtlich eines solchen Bauteils, insbesondere der Herstellung eines solchen Bauteils, ist die Verharzung von besonderer Bedeutung. Hierbei wird üblicherweise derart vorgegangen, dass Harz auf das Gewebe aufgebracht wird bzw. das Gewebe mit Harz getränkt wird und ein Überschußanteil des Harzes sodann ausgepreßt wird, um die Rückstellkräfte der Polfäden freizugeben, wodurch sich die gewünschte beabstandete Form der Lagen ergibt und nach Aushärtung des Harzes das erstrebte Bauteil. Im einzelnen ist es hierzu auch bekannt, ein Gewebe mit Harz zu besprühen. Sobald die kritische Menge von Harz durch Tränkung bezüglich des Gewebes erreicht ist, stellt sich eben die angesprochene gewünschte Beabstandung der Lage ein. Darüber hinaus wird aber auch noch nach alternativen Möglichkeiten der Verharzung gesucht.

Zum Stand der Technik ist im weiteren noch die JP 05 287 636 A1 und die

JP 05 287679 A1 zu nennen. Hieraus ist ein Gewebe bekannt, welches stark feuchtigkeitsaufnehmend sein soll. Darüber hinaus soll es noch einen angenehmen weichen Charakter haben. Es sind hieraus Zusatzschußfäden bekannt, die in obere und untere Taschen über- und unterhalb der Überkreuzungspunkte eingewebt sind.

Im Hinblick auf den vorstehend angeführten Stand der Technik stellt sich der Erfindung daher das technische Problem, ein Abstandsgewebe insbesondere als Basis zur Herstellung eines durch Verharzen daraus gebildeten Bauteiles anzugeben, das trotz Steigerung der Festigkeit eine möglichst geringe Steigerung an Gesamtgewicht aufweist und/oder möglichst einfach und wirksam im Hinblick auf das Verharzen zu verarbeiten ist.

Diese Aufgabe ist zunächst beim Gegenstand des Anspruchs 1 gelöst. Durch eine Zunahme der Verstrebungen zwischen den Lagen kann eine erhöhte Festigkeit erreicht werden, wenn diese Verstrebungen - im Bauteil letztlich gebildet durch Harzstränge oder Harzummantelung - auf Strukturen zurückgehen, die bereits gewebemäßig beim Herstellungsprozeß des Gewebes vorgesehen sind. Hierzu kann herstellungsmäßig jedenfalls bezüglich der Polfäden bereits bspw. vorgesehen sein, dass diese Noppen aufweisen oder Schlingen oder etwa texturiert sind, aus einem Effektgarn bestehen oder dergleichen. Hierdurch ergeben sich insbesondere in dem frei flottierenden Bereich zwischen den Lagen von den Zwischenelementen abstehende Verzweigungen, die bspw. astartig sein können, die - ohne webtechnisch miteinander verbunden zu sein - zu Überkreuzungen und Überlappungen mit entsprechenden Verzweigungen benachbarter Polfäden führen, so dass sich im (ausgehärteten) Verharzungszustand zusätzlich zu den Zwischenelementen gleichsam ein Gitterwerk - zwischen den Lagen - von verharzten Fäden oder Fadenteilen ausbilden kann. Hierbei ist es insbesondere auch von Bedeutung, wie aus der eingangs in bezug genommenen Literatur auch hervorgeht, dass ein solches Abstandsgewebe aus hochfesten Garnen wie Aramidfaser, Kohlefaser, Keramikfaser oder insbesondere Glasfaser besteht. In weiterer Ausgestaltung ist vorgesehen, dass auch von der Grundkette und/oder dem Schußmaterial Verzweigungen ausgehen oder hieran angebunden sind. Dies erweist sich insbesondere vorteilhaft im Hinblick auf die Innenflächen der Lagen des Abstandsgewebes, da es hierdurch im Bereich der Zwischenelemente zu verstärkten sockelartigen Übergangsbereichen kommt. Eine weitere, kombinativ oder alternativ mögliche Maßnahme, um die gewünschte Verstärkung zu erreichen, besteht darin, zwischen den Lagen des Abstandsgewebes Zusatzschußfäden einzuweben. Hierbei sind diese Zusatzschußfäden bevorzugt in den Überkreuzungsbereichen der Polfäden, die zwischen den Lagen flottieren, eingewebt. Ungeachtet dieser Zusatzschußfäden bleibt es aber bei dem Grundmuster eines bspw. Veloursgewebes. Es entstehen keine gewebte Brücken zwischen den Lagen des Abstandsgewebes. Die Zusatzschußfäden können im einzelnen durch die vor und nach dem Schuß von oben nach unten und umgekehrt wechselnden Polfäden fixiert sein. Auch können darüber hinaus zwischen den Lagen des Abstandsgewebes Zusatzkettfäden eingewebt sein. Insgesamt ist damit gleichsam die Struktur eines aus den sich überkreuzenden Schuß- und Kettfäden gebildeten Gitters zwischen die obere und untere Lage des Abstandsgewebes eingelegt und webtechnisch fixiert.

Im Hinblick auf die einfachere Verarbeitung führt diese Ausgestaltung auch zu dem weiteren Gegenstand der Erfindung, der ein Verfahren zur Ausbildung eines Bauteils auf Basis eines Abstandsgewebes, insbesondere eines Veloursgewebes, vorzugsweise eines Gewebes in einer der Ausgestaltungen, wie es vorstehend und nachstehend angesprochen ist, betrifft, wobei durch Verharzung eine beabstandete, im wesentlichen starre Ausbildung erreicht wird. Die Erfindung sieht vor, daß die Verharzung durch Schmelzen von in das Grundgerüst des Abstandsgewebes eingebrachten, insbesondere eingewebten zusätzlichen thermoplastischen Fasern durchgeführt wird. Bezüglich dieses Gegenstandes sind die vorgenannten Fasern bzw. Zusatzkettfäden oder Zusatzschußfäden aus einer thermoplastischen Faser gebildet, welche einen niedrigeren Schmelzpunkt aufweist als das Material des Grundgewebes, d.h. der Grundkette und der Grundschußfäden sowie der Polfäden. Insbesondere durch die Einbringung solcher zusätzlichen Garnanteile in den Zwischenraum zwischen den beiden Lagen ist ein geeigneter Vorratsraum geschaffen, um durch entsprechende Erwärmung dieses Zusatzmaterial zum Schmelzen zu bringen und hierdurch die Verharzung des Abstands/Grundgewebes zu erreichen. Wesentlich ist, daß praktisch keine Anteile des Grundgewebes selbst aus derartigen thermoplastischen Fasern gewebt sind. Durch die Wärmeaufbringung entstehen also in den Lagen - und auch bezüglich der Polfäden - kein Fehlstellen, die zu Löchern oder Schwächungen führen könnten. Hinsichtlich solcher thermoplastischen Fasern sind im Stand der Technik eine Vielzahl bekannt, bspw. solche aus Polystyrol, Polyethylen oder Polypropylen . In diesem Zusammenhang ist Gegenstand der Erfindung auch ein zugehöriges Abstandsgewebe, insbesondere Veloursgewebe, mit einer ersten und einer zweiten Lage, die aus einer Grundkette und aus einem Grundschuß gebildet sind, und die Lagen verbindenden Polfäden, wobei zwischen den Lagen und angebunden an oder ausgehend von den frei flottierenden Polfäden in Schuß- und/oder Kettrichtung verlaufende Verzweigungen ausgebildet sind und diese Verzweigungen aus einem thermoplastischen Fasermaterial bestehen, das einen niedrigeren Schmelzpunkt aufweist als die Grundkette, der Grundschuß oder die Polfäden. Durch den Anteil dieser thermoplastischen Faser kann gleichzeitig der Grad der Verharzung sehr fein gesteuert werden.

Auch bezüglich des weiteren Gegenstandes der Erfindung, des Bauteils auf Basis eines Abstandsgewebes wie insbesondere eines Veloursgewebes, wie es insbesondere auch zunächst beschrieben worden ist, besteht dieses aus mindestens einer ersten und einer zweiten Lage und diese Lagen verbindenden Zwischenelementen in Form von Zwischenstegen, wie dies im einzelnen in der bereits mehrfach genannten EP-B1 299 308 beschrieben ist. Ausgehend von den Zwischenelementen sind bei einem solchermaßen hergestellten Bauteil Zweigelemente ausgebildet, welche im wesentlichen seitlich orientiert sind und eine Brücke zu einem benachbarten Zwischenelement bilden. Wie bereits hinsichtlich des zugrundeliegenden Gewebes beschrieben, kommen diese Brücken insbesondere auch dadurch zustande, daß sich gleichsam von dem benachbarten Zwischenelement ein Faserteil entgegenstreckt. Entsprechend sind diese Zweigelemente durch das verwendete Garn bestimmt, wobei als Basis Fäden mit Noppen, Schlaufen, texturierte oder im Effektzwirnverfahren hergestellte Fäden dienen. Des weiteren sind auch beim Bauteil die bereits gewebemäßig beschriebenen Zusatzkett- und Zusatzschußfäden kombinativ oder alternativ hierzu die Grundlage. Eine besondere Ausgestaltung ist im übrigen weiter kombinativ oder alternativ dadurch gegeben, daß die Zwischenstege nicht nur, wie in der EP-B1 299 308 beschrieben und dargestellt, aus wendelförmig verdrillten oder insbesondere zueinander 8-förmig angeordneten verharzten Fäden bestehen, sondern daß Doppelfäden und entsprechend Doppelstege bezüglich eines Faden-Steges eines Zwischenelementes ausgebildet sind. Anstelle einer 8-Konfiguration zeigt sich dann eine Doppel-8-Konfiguration. Auch bei den kreuzweise verlaufenden Faden-Stegen ergibt sich hieraus eine Verdoppelung der Faden-Stege von zwei auf vier, die zudem noch bevorzugt derart gekrümmt verlaufen, daß sie zwischen sich eine durch zwei gekrümmte Linien begrenzte, bspw. gestreckt sichelförmig gestaltete Öffnung belassen.

Nachstehend ist die Erfindung des weiteren anhand der beigefügten Zeichnung, die jedoch lediglich Ausführungsbeispiele wiedergibt, erläutert. Hierbei zeigt:
- Fig. 1-5: Webschema eines Veloursabstandsgewebes mit jeweils einem zusätzlichen Schußfaden im Überkreuzungsbereich von vier Polfäden;
- Fig. 6-10: Gewebeschema gemäß den Fig. 1 bis 5, mit zusätzlich zwei Kettfäden;
- Fig. 11: ein Webschema gemäß Fig. 1, jedoch mit zwei zusätzlichen Schußfäden, die jeweils zwischen den Überkreuzungsbereichen von drei Polfäden eingebunden sind;
- Fig. 12, 13: Abwandlungen des Webschemas gemäß Fig. 11
- Fig. 14: ein Webschema gemäß Fig. 2, mit einem Zusatzkettfaden, jedoch vier Zusatzschußfäden;

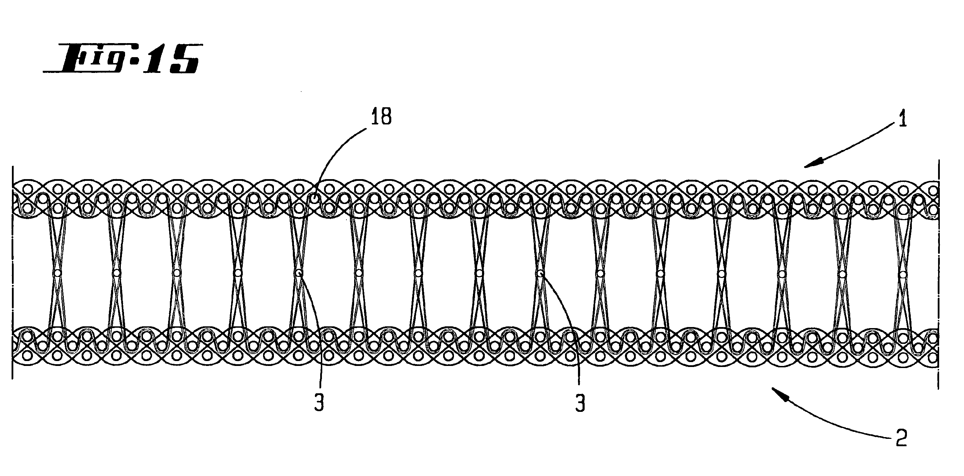

- Fig. 15: ein Webschema entsprechend dem Webschema von Fig. 1, jedoch abgewandelt im Hinblick auf ein biegefähiges Gewebe;
- Fig. 16: eine schematisierte Darstellung eines ausgehärteten Bauteils mit Zwischenbrücken zwischen den Zwischenelementen;
- Fig. 17: eine Querschnitts-Darstellung eines Bauteils auf Basis eines Gewebes mit Zusatzkett- und Zusatzschußfäden;
- Fig. 18: eine Querschnitts-Darstellung gemäß Fig. 17, wobei kreuz- und 8-förmige Zwischenelemente einander abwechseln;
- Fig. 19: eine perspektivische, teilweise aufgeschnittene Ansicht eines Bauteils gemäß Fig. 16;
- Fig. 20: eine Darstellung gemäß Fig. 19 eines Bauteils gemäß Fig. 18.
- Fig. 21: ein Webschema, wie es insbesondere im Hinblick auf thermoplastische Zusatzschuß- und/oder Zusatzkettfäden zur Anwendung kommen kann;
- Fig.22-24: Variationsmöglichkeiten hinsichtlich der Grundketten bezüglich aller dargestellten Webschemata;
- Fig. 25: ein Webschema, das insbesondere hinsichtlich einer Tränkbarkeit des Gewebes mit Harz Vorteile erbracht hat;
- Fig. 26: ein weiteres Webschema, das hinsichtlich einer Tränkung mit Harz vorteilhaft ist;
- Fig. 27: ein nochmals weiteres Webschema, das hinsichtlich einer Tränkung mit Harz vorteilhaft ist;
- Fig. 28: ein Gewebeschema mit oberseitigen Schußfäden, die eine strukturierte Oberfläche aufweisen;
- Fig. 29: eine Darstellung gemäß Fig. 28, bei einem abweichenden Gewebeschema;
- Fig. 30: ein auf Basis eines Gewebes gemäß Fig. 28 hergestelltes verharztes Bauteil, in teilweise geschnittener perpektivischer Ansicht;
- Fig. 31: ein Bauteil gemäß Fig. 30, im Querschnitt, versehen mit einer oberen Putzschicht.

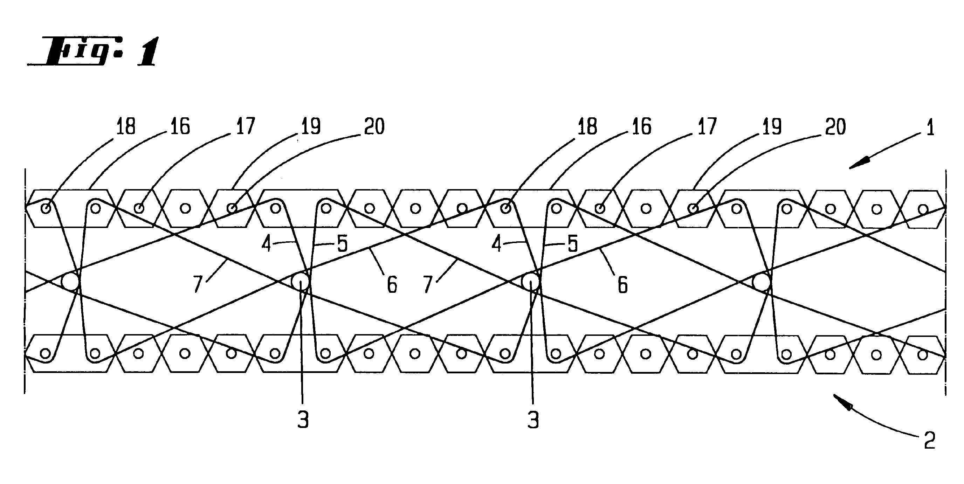

Dargestellt und beschrieben ist - zunächst mit Bezug zu Fig. 1 - ein Webschema eines Veloursgewebes, bei welchem zwischen den Lagen 1 und 2 zusätzliche Schußfäden 3 eingewebt sind. Bei dem Ausführungsbeispiel sind die zusätzlichen Schußfäden 3 im Überkreuzungsbereich, derart, daß sie gleichzeitig gehaltert sind, der Polfäden 4, 5, 6 und 7 jeweils eingewebt. Die Polfäden 4 bis 7 wechseln jeweils von oben nach unten, umschlingen hierbei die zusätzlichen Schußfäden 3 jedoch nicht. Hierdurch werden die zusätzlichen Schußfäden 3 in der Abstandsmitte fixiert. Die freie Länge der Polfäden 4 bis 7 zwischen den Lagen 1 und 2 wird hiermit jeweils praktisch halbiert, ohne daß die Polfäden jedoch zwischen Lagen 1 und 2 eine volle Umschlingung etwa eines Zusatzfadens durchführen.

Die Polfäden 4 bis 7 laufen im übrigen jeweils in den Lagen 1 bzw. 2 in Fächer 16 ein, in denen zwei Schußfäden 17, 18 aufgenommen sind. Zwischen den Fächern 16 sind jeweils drei weitere Fächer 19 ausgebildet, in welchen jeweils ein einzelner Schußfaden 20 aufgenommen ist. Die Fächer 19 werden von den Polfäden 4 bis 7 also jeweils übersprungen, während in den Fächern 16 immer zwei Polfäden um einen Schußfaden 17 bzw. 18 gelegt sind und sodann wieder zu der anderen Lage 1 bzw. 2 hin verlaufen.

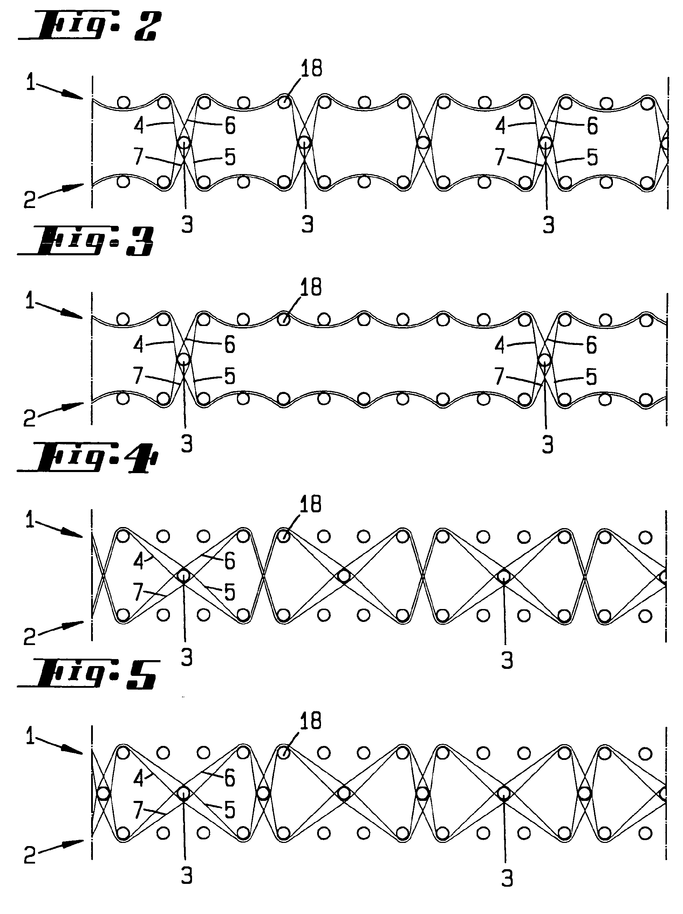

Bei den Fig. 2 bis 10 sind die Lagen 1, 2 jeweils nur hinsichtlich der Schußfäden angedeutet. Die Kettfäden sind nicht dargestellt.

Während bei dem Webschema gemäß Fig. 1 nur die Polfäden 4 und 5 oberhalb bzw. unterhalb des Schußfadens 3 in ein Fach 16 einlaufen, laufen bei dem Webschema gemäß Fig. 2 alle vier Polfäden jeweils in ein darüber bzw. darunter befindliches Fach 16 ein. Im übrigen sind bei dem Schema gemäß Fig. 2 jeweils ein Fach 16 und ein Fach 19 abwechselnd nebeneinander in den Lagen 1 und 2 vorgesehen.

Das Webschema der Fig. 3 entspricht dem Webschema der Fig. 2 mit dem Unterschied, daß zwischen zwei Fächern 16 sieben Zwischenfächer 19 vorgesehen sind.

Das Webschema der Fig. 4 ist eine Weiterentwicklung des Webschemas der Fig. 2, wobei jedoch die Polfäden, nachdem sie in einem Fach 16 um einen Schußfaden 18 geführt sind, wieder auf die jeweils andere Lage hin verlaufen und in ihrem Überkreuzungspunkt der Schußfaden 3 eingewebt ist. Bei der Überkreuzung der Polfäden, wo diese unmittelbar zwischen zwei Fächern 16 wechseln, ist kein Schußfaden 3 eingewebt. Im übrigen sind zwischen zwei Fächern 16 jeweils zwei Fächer 19 vorgesehen.

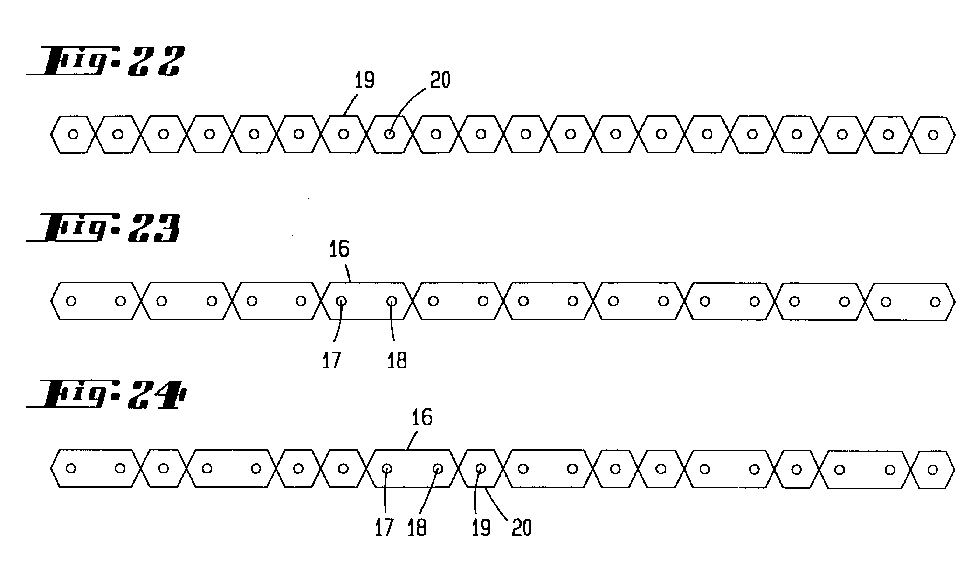

Es sind auch andere Grundbindungen auf Basis von insbesondere Leinwand- und Körperbindung sowie Ableitungen daraus ohne weiteres möglich. Um hier Varianten aufzuzeigen, ist insbesondere auf die Figuren 22 bis 24 zu verweisen. Während Fig. 22 Einzelfächer 19 mit jeweils mit einem einzelnen Schußfaden 20 zeigt, zeigt Fig. 23 eine Bindung, bei welcher in einem Fach 16 jeweils zwei Schußfäden 17, 18 einliegen und Fig. 24 eine solche, wo Zwischenfächer 16 mit zwei Schußfäden 18, 19 und Fächer 20 mit einem Schußfaden 19 angeordnet sind, abwechselnd eines und zwei dieser Fächer 16 bzw. 19.

Das Webschema der Fig. 5 entspricht dem der Fig. 4, mit dem Unterschied, daß jetzt auch, entsprechend Fig. 2 an der Überkreuzung der Polfäden 4 bis 7, wo diese unmittelbar zwischen zwei Fächern 16 wechseln, ein Schußfaden 3 eingewebt ist.

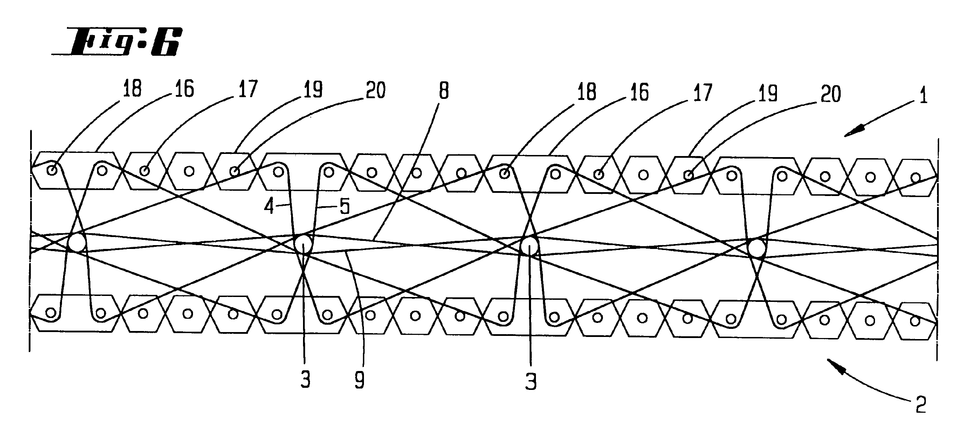

Bei dem Webschema gemäß der Fig. 6 sind zusätzlich zu den Zusatzschußfäden 3 Zusatzkettfäden 8, 9 vorgesehen. Im übrigen sind hier gleiche Verhältnisse hinsichtlich der Schußfächer 16 und 19 gegeben wie beim Webschema der Fig. 1.

Bei den Fig. 2 bis 10 ist wiederum eine abstrahiertere Form der Darstellung gewählt.

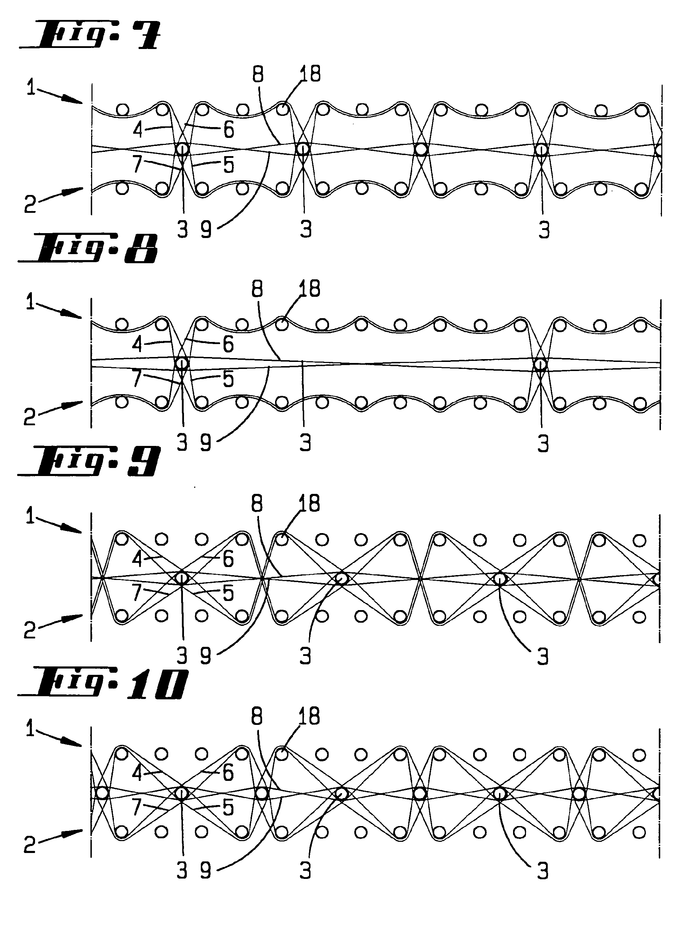

Das Webschema der Fig. 7 entspricht dem der Fig. 2, wobei jedoch auch hier die zwei zusätzlichen Zusatzkettfäden 8, 9 vorgesehen sind.

Das Webschema der Fig. 8 entspricht dem der Fig. 3, wobei eben auch hier die zwei Zusatzkettfäden 8, 9 vorgesehen sind.

In gleicher Weise entspricht das Webschema der Fig. 9 dem der Fig. 4 und das Webschema der Fig. 10 dem der Fig. 5.

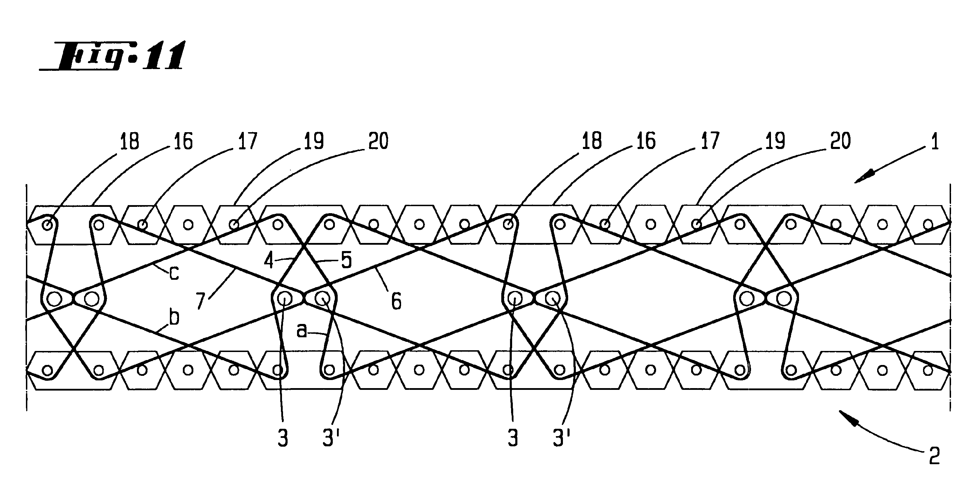

Das Webschema der Fig. 11 geht aus von einem Webschema gemäß der Fig. 1, wobei jedoch hier in einem Überkreuzungsbereich der Polfäden 4 bis 7 jeweils zwei Zusatzschußfäden 3, 3' eingebracht sind.

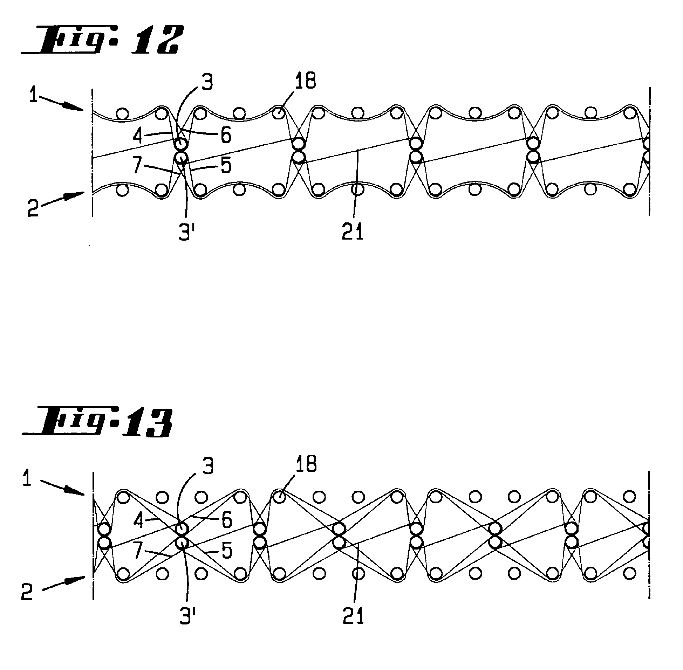

Das Webschema der Fig. 12 entspricht dem der Fig. 2, wobei jedoch hier ein Zusatzkettfaden 21 eingebracht ist, der zwischen zwei übereinanderliegenden Zusatzschußfäden 3, 3' S-förmig wechselt. Er umschlingt also je zur Hälfte den Zusatzschußfaden 3 und den Zusatzschußfaden 3', um dann ohne in die Lage 1 oder 2 einzulaufen, zu dem nächsten Zusatzschußfaden 3 zu laufen.

Auch die Polfäden 4 bis 7 wechseln bei diesem Webschema jeweils S-förmig bezüglich der Zusatzschußfäden 3, 3'.

Das Webschema der Fig. 13 entspricht dem der Fig. 4, wobei jedoch auch hier zwei Zusatzschußfäden 3, 3' jeweils vorgesehen sind, unter S-förmigem Wechsel der Polfäden 4 bis 7 um diese Zusatzschußfäden 3, 3', wie vorstehend im Hinblick auf das Webschema der Fig. 12 erläutert, und mit einem Zusatzkettfaden 21, der in gleicher Weise wie vorstehend zu dem Webschema der Fig. 12 erläutert, S-förmig bezüglich der Zusatzschußfäden 3, 3' wechselt.

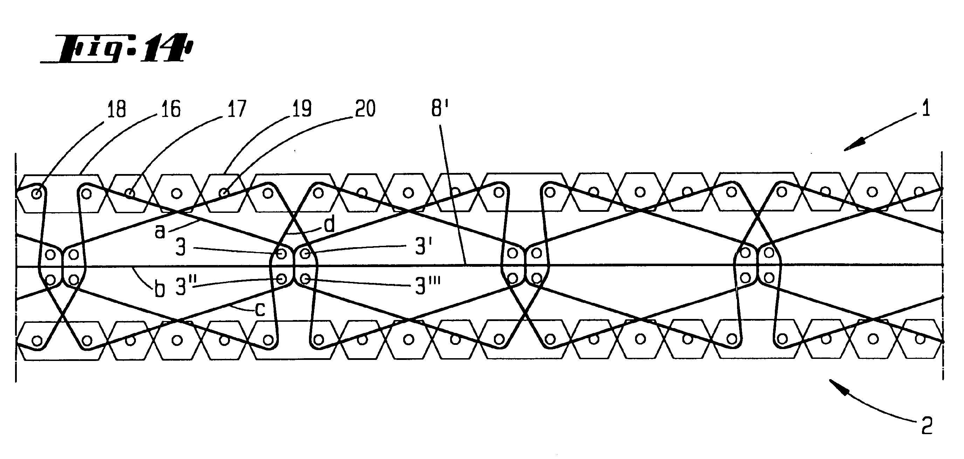

Bei dem Webschema der Fig. 14 sind vier Zusatzschußfäden 3, 3', 3" und 3"" vorgesehen sowie darüber hinaus noch ein zwischen den Zusatzschußfäden 3 und 3"' bzw. 3" und 3"" verlaufender Zusatzkettfaden 8'. Im übrigen entspricht das Webschema der Fig. 14 dem der Fig. 11.

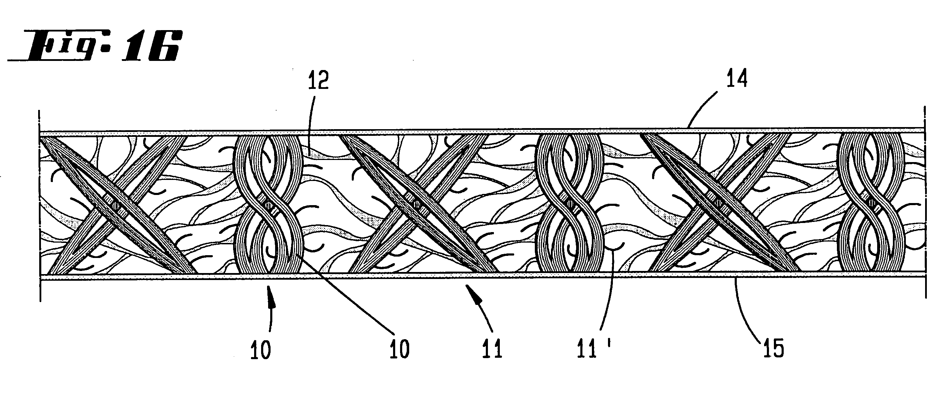

Bezüglich des aufgrund eines Gewebes, insbesondere in einer der vorstehend aufgeführten Arten hergestellten Bauteiles ist in Fig. 16, in etwas stilisierter Form, ein Querschnitt durch ein Bauteil dargestellt, bei welchem im wesentlich 8-förmig gestaltete Zwischenelemente 10 mit Faden-Stegen 10' und kreuzförmig gestaltete Zwischenelemente 11 mit Faden-Stegen 11' vorgesehen sind. Bei der Darstellung gemäß Fig. 16 ist sowohl bei den 8-förmigen Zwischenstegen 10 wie auch bei den kreuzförmig gestalteten Zwischenelementen 11 jeweils bereits eine Doppelstegausführung dargestellt. Es kann sich hier auch um eine Einfachstegausführung handeln, wie sie grundsätzlich in der bereits mehrfach zitierten EP-B1 299 308 dargestellt und beschrieben ist. Zwischen zuvor zugeordneten Fadenstegen der Doppelstegausführung ergeben sich sichelförmige Öffnungen, die je nach Verharzung auch durch eine Harzhaut geschlossen sein können.

Wesentlich bei der Darstellung gemäß Fig. 16 sind die Zwischenbrücken 12, die sich zwischen den Zwischenelementen 10 und 11 ausbilden. Diese Zwischenbrücken 12 sind durch die Verwendung eines besonderen Effektgarnes erhalten. Dieses Effektgarn kann bspw. Noppen oder Schlaufen aufweisen, oder texturiert sein oder im Effektzwirnverfahren hergestellt sein. Dies alles bei technischen Garnen, die eingangs im einzelnen aufgezählt sind. Hinsichtlich der Noppen kann auch vorgesehen sein, wie dies bspw. aus dem Gebrauchsmuster 90 07 289 für sich bekannt ist, daß diese durch eingelegte Fäden erhalten sind. Im verharzten Zustand ergeben sich dann zwischen den Zwischenelementen 10 und 11 eben die Zwischenbrücken 12.

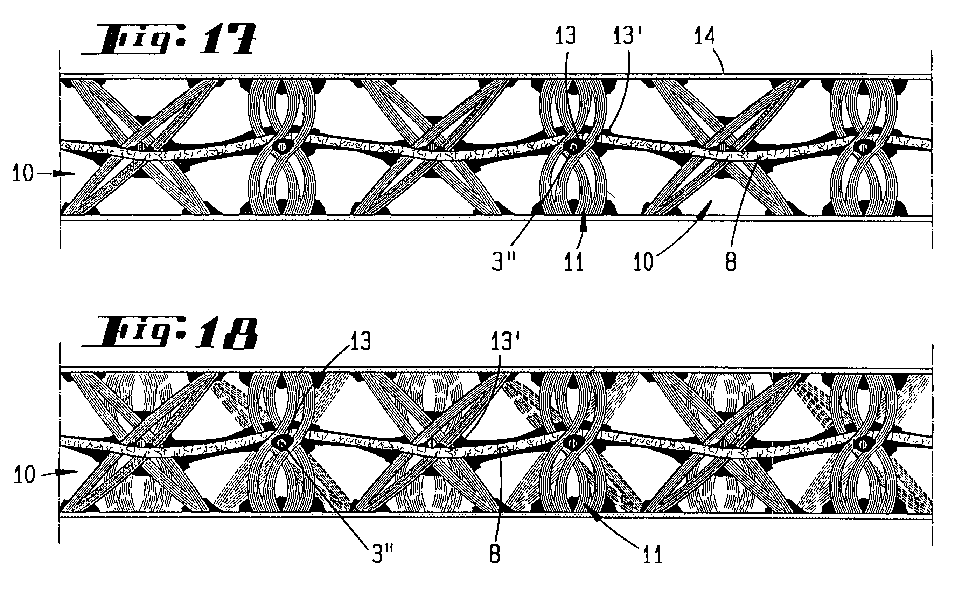

In Fig. 17 ist ein verharztes Bauteil auf Basis eines Gewebes mit Zusatzschußfäden und Zusatzkettfäden dargestellt. Auch hier ist die Doppelausführung der kreuzförmigen Zwischenelemente 10 und der im wesentlichen 8-förmigen Zwischenelemente 11 zu erkennen. Weiterhin ist dargestellt, daß sich um die Zusatzschußfäden 3 und die Zusatzkettfäden 8 jeweils eine Umhüllung 13 bzw. 13' aus ausgehärtetem Harz ausbildet, die zu den Überkreuzungsbereichen der Polfäden hin dicker ist und in der Mitte des freistehenden Zwischenbrückenteils 12 in der Regel am dünnsten ist. Insgesamt ist hierdurch ein Zwischen-Stegteil geschaffen, das in Kett- und/oder Schußrichtung zwischen den Lagen 14, 15 benachbarte Zwischenelemente 10, 11 miteinander verbindet.

Bei der Darstellung gemäß Fig. 18 ist das zugrunde gelegte Gewebe so beschaffen, daß in dem Bauteil sich kreuzförmige und 8-förmige Zwischenelemente 10 bzw. 11 hintereinander, senkrecht zu einer Erstreckungsebene dieser Zwischenelemente, abwechseln.

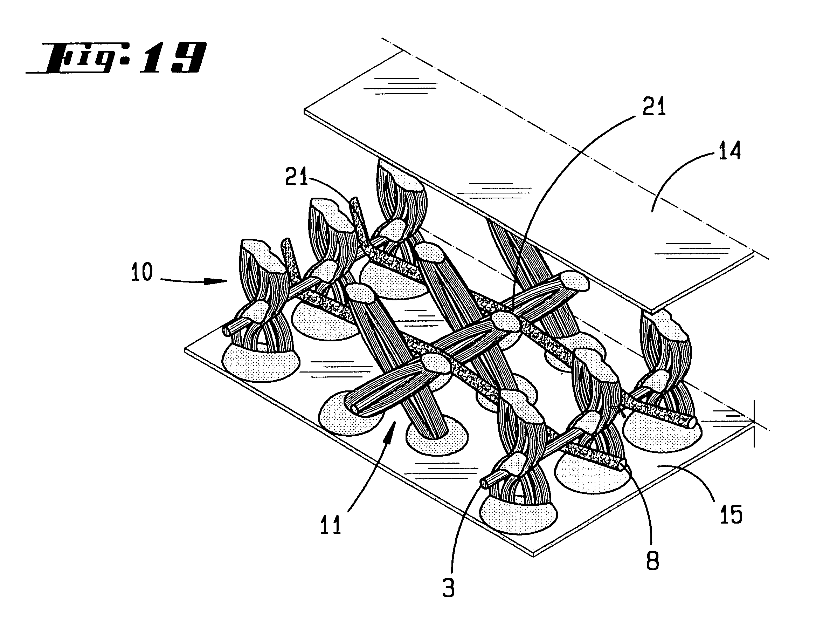

Aus der perspektivischen Darstellung gemäß Fig. 19 wird besonders deutlich, daß die Zusatzkettfäden 8 und die Zusatzschußfäden 3 - für sich genommen - ein Zwischengitter zwischen den oberen und unteren Lagen 14, 15 des verharzten Bauteiles bilden, mit Überkreuzungspunkten 21, die jeweils zwischen hintereinander befindlichen 8-förmigen oder kreuzförmigen Strukturen der Zwischenelemente 10, 11 angeordnet sind. Darüber hinaus ist das Zwischengitter natürlich auch in den Zwischenelementen jeweils durch Verharzung verankert.

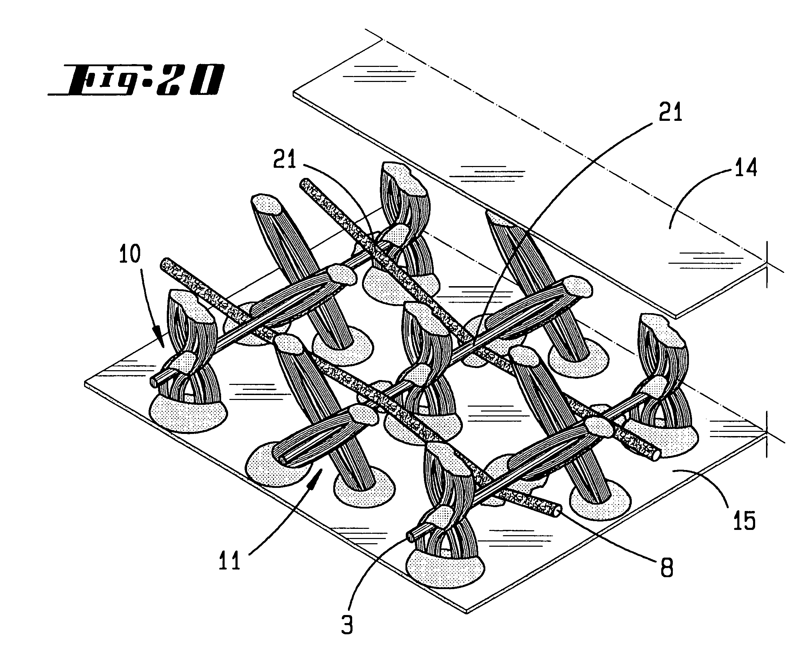

Gleiches ist aus der perspektivischen Darstellung gemäß Fig. 20 zu entnehmen.

Bei den Darstellungen der Fig. 19 und 20 ist der Übersichtlichkeit halber nur teilweise die Verharzung und damit Verbindung der Polfäden bzw. Zusatzschuß- oder Zusatzkettfäden angedeutet. Bei einem realen Bauteil ist die Verharzung insbesondere in den Überkreuzungspunkten stärker und sind im wesentlichen die Fäden, insbesondere die Zusatzkettfäden und die Zusatzschußfäden, auf ihrer ganzen Länge verharzt im Sinne der beschriebenen Umhüllungen 13 bzw. 13'.

Soweit die Zwischenbrücken 12 durch die angesprochenen Spezialgarne, wie bspw. abstehende Fasern, Noppen, Schlingen oder dgl. erzeugt werden, kann der Abstand sowie die Länge der von den Stegfäden (auch als Seelenfäden zu bezeichnen) im einzelnen abstehenden Schlingen, Noppen oder dgl. beliebig variiert werden. Die Länge sollte ausreichen, um den Abstand zum nächstliegenden Stegfaden zu überbrücken.

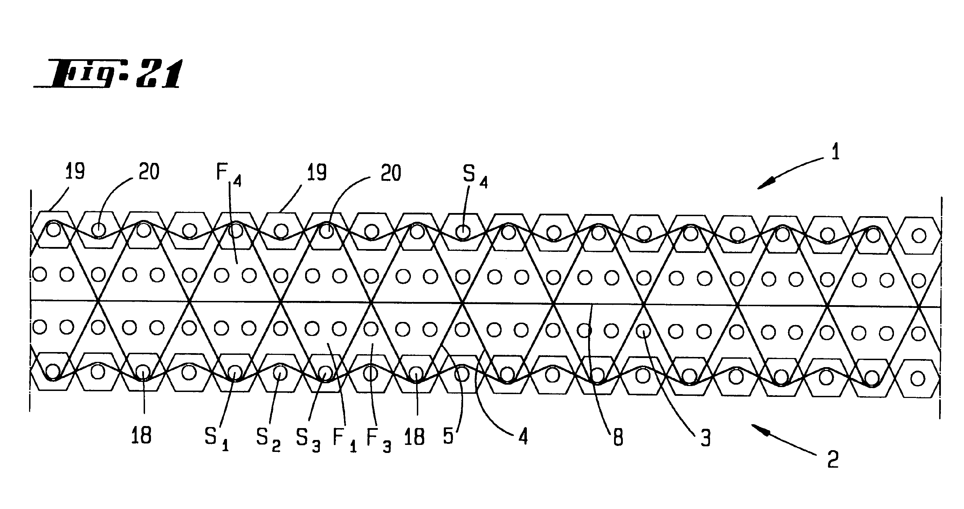

Bezüglich des Webschemas gemäß Fig. 21 ist insbesondere darauf hinzuweisen, daß hier ein Zusatzkettfaden 8 vorgesehen ist und in die dadurch geschaffenen Fächer F1 bzw. F2 - in Zusammenwirkung mit den flottierenden Polfäden 4, 5 - Zusatzschußfäden 3 eingelegt sind. Diese Schußfäden 3 sind bei dem Webschema gemäß Fig. 21 nicht verwebt, sondern nur eingelegt. Von besonderer Bedeutung ist, daß es sich hierbei um Fäden aus einem thermoplastischen Material handelt. Grundsätzlich können Zusatzschußfäden 3 aber auch bei dieser Ausführung webmäßig in das Gewebe eingebunden sein. Das ledigliche Einlegen hat jedoch Vorteile bspw. hinsichtlich der Verarbeitung unterschiedlicher Materialien. Insbesondere sind hier thermoplastische Fäden angesprochen. Durch dieses Einlegen zwischen den beiden äußeren Lagen des Abstandsgewebes kann bei Erhitzung dieses Abstandsgewebes eine Verharzung - durch Verflüssigung der thermoplastischen Fäden - von innen heraus des Gewebes erfolgen. Durch die Einlage in die Kammerungen läßt sich dies auch sehr günstig steuern. Die zwei Schußfäden 3 in einem Fach F1 sind lediglich eine mögliche Anzahl. Es können auch noch mehr Schußfäden 3 in einem solchen Fach F1 bzw. F2 aufgenommen sein. Darüber hinaus sind auch noch Zusatzschußfäden 3 in einem Fach F3 aufgenommen, das allein durch die sich kreuzenden Polfäden 4, 5 gebildet ist. Auch kann der Zusatzkettfaden 8 aus einer solchen thermoplastischen Faser bestehen. Dies ist jedoch abhängig von der gewünschten Steifigkeit des entstehenden Bauteiles. Es kann sich auch empfehlen, auch in diesem Fall den Zusatzkettfaden aus einem Material wie das Grundgewebe herzustellen, also insbesondere aus Glasfaser.

Weiter ist ersichtlich, daß ein Polfaden 4, 5 in der oberen oder unteren Lage immer zunächst um einen Schußfaden S1 unten herum geführt ist (bzw. oben herum) dann um den Nächsten S2 oben herum, um den Übernächsten S3 wiederum unten herum und erst dann wieder zu der anderen Lage hin wechselt, unter Überspringung eines Schußfadens S4.

Die Fig. 22 bis 24 zeigen verschiedene Webbindungen der Grundketten, die mit allen dargestellten Webschemata kombiniert werden können.

Von besonderer Bedeutung ist, insbesondere hinsichtlich der Webschemata der Fig. 23 und 24, daß die Grundkettfäden der ersten und zweiten Reihe, d. h. die Grundkettfäden einer Lage bspw. gemäß den Ausführungen der Fig. 23 und 24 jeweils hintereinander liegend angeordnet sein können. Daraus ergibt sich eine beschränkt offene Gewebeoberfläche, welche gute Eigenschaften hinsichtlich einer Tränkbarkeit des Gewebes mit Harz zeigt. Die Unterware zeigt die gleiche Grundbindung.

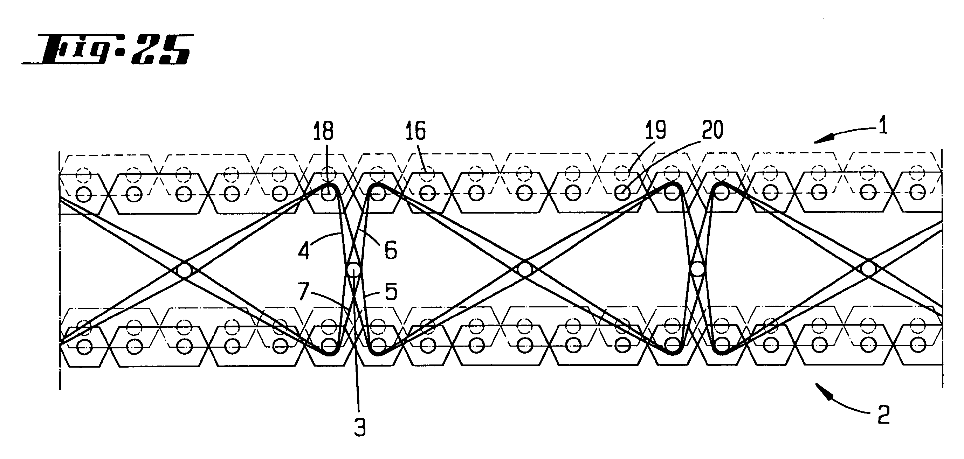

Dies ist verdeutlicht anhand der Webschemata der Figuren 25 bis 27. Die jeweils (in Tiefenrichtung, also senkrecht zur Zeichenebene) daneben liegende Grundkette ist gestrichelt dargestellt. Eine solche Bindung ist jedenfalls dann von Bedeutung, wenn in herkömmlicher Weise eine Verharzung von Außen vorgenommen wird. Die Fächer mit einem einzelnen Schußfaden in der oberen bzw. unteren Lage sind jeweils mit der Anzahl 3 vorgesehen, wobei aber nur bezüglich 2 Schußfäden in diesen Fächern jeweils eine Anbindung der Polfäden, die zwischen den Lagen wechseln, vorgenommen ist.

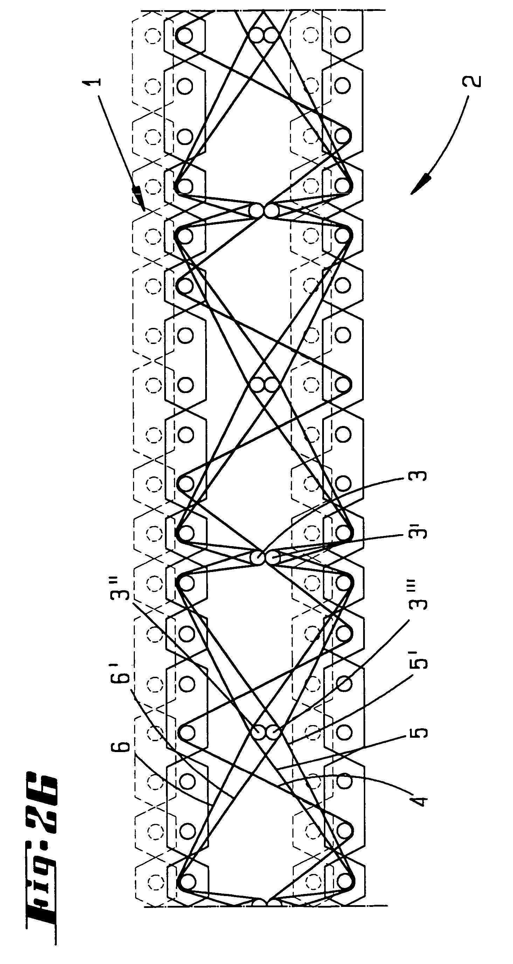

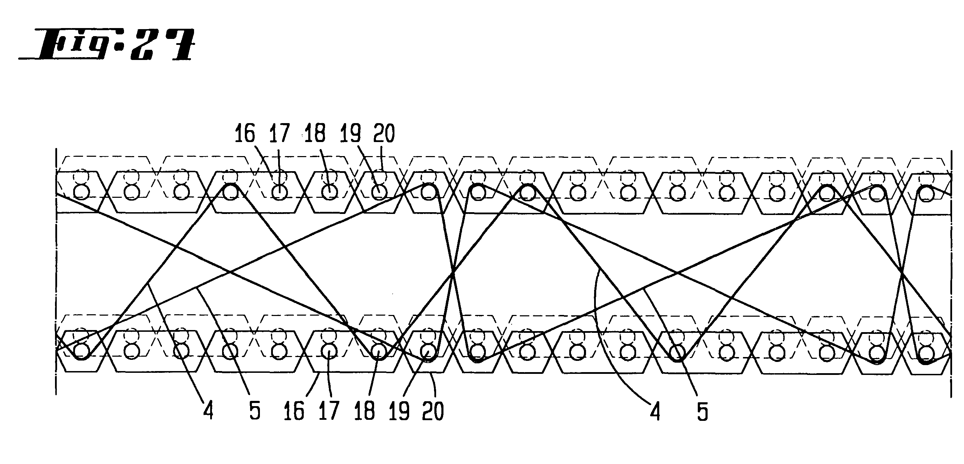

Im übrigen zeigen die Fig. 26 und 27 nochmals weitere mögliche Varianten hinsichtlich der Zusatzschußfäden 3, bzw. hinsichtlich der Anordnung der Polfäden 4, 5.

Während ein Polfaden 4 jeweils 3 bzw. 4 Schußfäden in der unteren bzw. oberen Lage überspringend wechselt und hierbei hinsichtlich der Zusatzschußfäden 3, 3' nur S-förmig zwischen diesen wechselt, sind weitere Polfäden 5, 5' und 6, 6' vorgesehen, die zum einen zwischen den Lagen unter Überspringung von fünf Schußfäden in der oberen bzw. unteren Lage wechseln und sodann von einem zum anderen Schußfaden in der oberen und unteren Lage wechseln und sowohl bei dem ersten Wechseln mit Zusatzschußfäden 3", 3"' eine Wechselwirkung aufnehmen, in dem sie diese in einem aufgespannten Fach zwischen den Polfäden 6, 6' und 5, 5' haltern, zum anderen mit den Zusatzschußfäden 3, 3' in Wechselwirkung treten.

Auf die vorbeschriebenen Weisen ist gleichsam ein 3-lagigesAbstandsgewebe (in bezug auf die Zusatzschußfäden bzw. Zusatzkettfäden) hergestellt, wobei jedoch die Fadendichte der "Mittellage" unter der der oberen und unteren Lagen liegt. Vorzugsweise wird der "Mittellage" in Schußrichtung ein bis sechs Zusatzkettfäden oder Zusatzschußfäden pro cm eingewebt.

Im Vergleich zu dem aus der Natur bekannten Aufbau eines Vogelknochens, ist eine Sandwichkonstruktion erreicht, welche bei relativ geringem Gewicht sehr hohe Festigkeiten erbringt.

Der Harzanteil liegt bevorzugt etwa bei 45 bis 65 % des Gesamtgewichtes eines solchermaßen hergestellten Bauteiles, bspw. einer Platte.

Insgesamt ist die Druckfestigkeit, die Biegesteifigkeit und die Schubsteifigkeit verbessert. Hiermit lassen sich Anwendungsfelder erschließen, die bislang Sandwichmaterialien vorbehalten waren, die solche Festigkeitswerte erreichten.

Gegenstand der Erfindung ist auch ein Abstandsgewebe, insbesondere Veloursgewebe, mit einer ersten und einer zweiten Lage und die Lage verbindenden Polfäden, bei welchen hinsichtlich einer Anhaftung auf einer Außenseite des Abstandsgewebes eine wirkungsvolle Verbesserung erzielt ist. Erfindungsgemäß ist in diesem Zusammenhang vorgesehen, daß in einer oder beiden Lagen, einer Außenfläche des Abstandsgewebes zugeordnet, Schußfäden mit strukturierter Oberfläche eingewebt sind, bspw. Loopgarne, Schlingengarne, texturierte Garne usw.

Darüber hinaus betrifft die Erfindung auch ein auf Basis eines solchen Gewebes hergestelltes Bauteil, nämlich durch Verharzen hergestellt. Wesentlich ist, daß diese Loopgarne, Schlingengarne usw. freikragende Abschnitte bilden, die im verharzten Zustand über eine obere Fläche des Bauteils (oder eine untere Fläche oder beide Flächen) vorstehen. Wenn eine aus dem Gewebe hergestellte Abstandsplatte bspw. oberflächig mit einer Putzschicht oder dergleichen versehen wird, bilden die freikragenden Abschnitte der strukturierten Garne gleichsam Anker, die frei in den Putz oder eine sonstige Schicht eindringen. Darüber hinaus ist dies natürlich auch vorteilhaft, wenn man mehrere Platten von Abstandsgeweben übereinander anordnet und bspw. mittels einer aushärtenden Harzschicht verbindet.

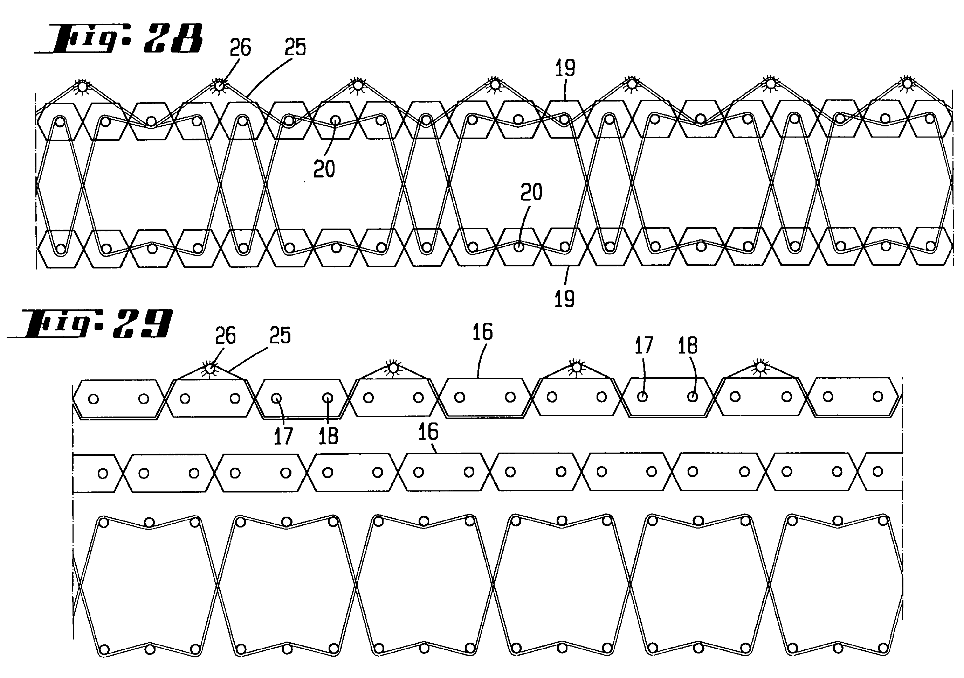

In diesem Zusammenhang ist auf die Fig. 28, 29, 30 und 31 zu verweisen.

In Fig. 28 ist das grundsätzliche Webschema eines Velours-Abstandsgewebes dargestellt. Beim Ausführungsbeispiel der Fig. 28 ist in die obere Gewebelage ein Zusatzkettfaden 25 eingewebt, welcher webtechnisch mit einem Zusatzschußfaden 26 verbunden ist. Der Zusatzschußfaden 26 ist als Schußfaden mit strukturierter Oberfläche ausgebildet, bspw. in Form eines Spezialzwirns wie eines Loopgarns, eines Schlingengarns, eines texturierten Garns usw. Gegebenenfalls können auch die Zusatzkettfäden 25 mit einer solchen Oberfläche ausgebildet sein. Darüber hinaus ist es auch grundsätzlich möglich, daß keine Zusatzkettfäden 25 oder Zusatzschußfäden 26 vorgesehen sind, sondern daß sogleich die entsprechenden Fäden des Grundgewebes so ausgestaltet sind. Die Zusatzschußfäden und Zusatzkettfäden haben jedoch den Vorteil, daß auch von dem Grundgewebe abweichende Materialien verwendet werden können. Bspw. können die Fäden nicht nur aus Glasfasern, Carbonfasern und Aramidfasern, sondern auch aus Polyestermaterial, Polyamidmaterial und Polypropylenmaterial bestehen. Darüber hinaus können sie auch als Endlos- oder Stapelfasern ausgebildet sein. Es ist auch noch möglich, zu diesem Zweck natürliche Spinnstoffe einzusetzen.

In Fig. 29 ist ein solches Webschema dargestellt mit verschiedenen Webbindungen der oberen und der unteren Lage, die wiederum wie grundsätzlich vorstehend zu den Fig. 25 bis 27 erläutert, hintereinander (über die Tiefe) angeordnet sein können. Das Webschema der Fig. 29 entspricht im übrigen dem eines üblichen Verloursgewebes.

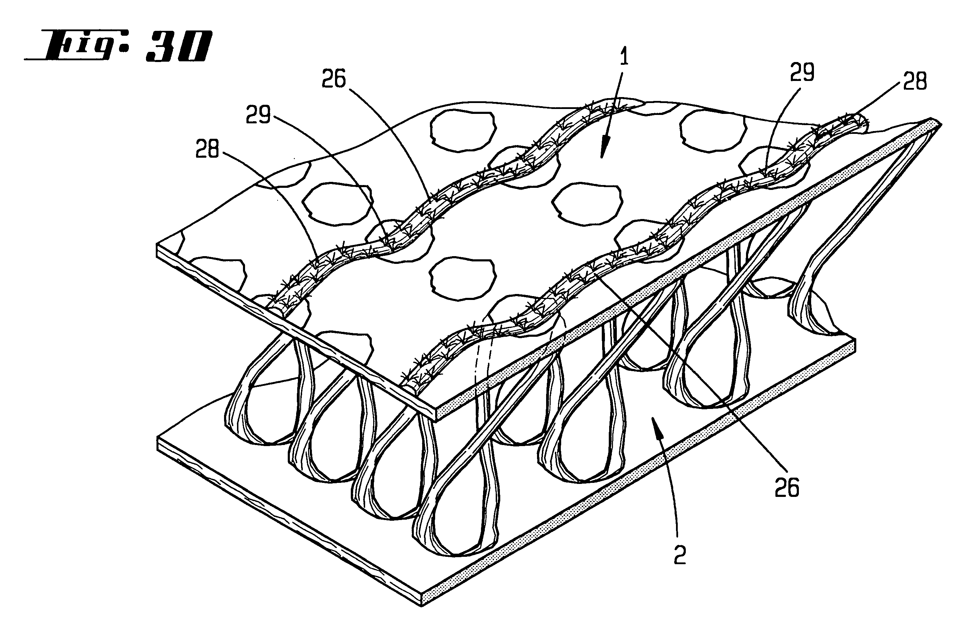

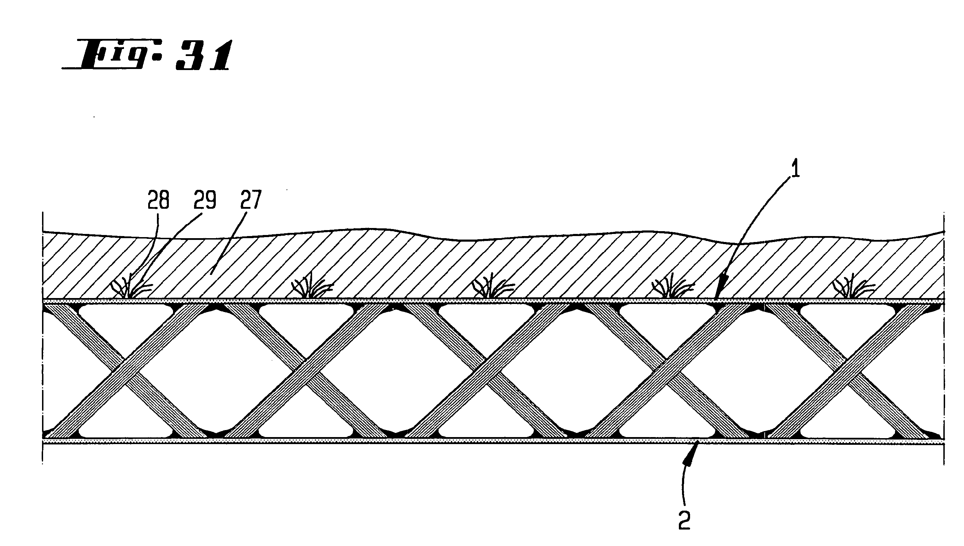

In Fig. 30 ist in perspektivischer Ansicht ein hieraus nach Verharzen hergestelltes Bauteil dargestellt. Darüber hinaus ist in Fig. 31 in schematischer Weise ein Querschnitt durch ein solches Bauteil mit einer oben aufgebrachten Putzschicht 27 dargestellt. Es ist zu erkennen, daß freikragende Abschnitte 28, 29 der Zusatzschußfäden in die Putzschicht 27 hineinragen und somit eine feste Verankerung zwischen dem verharzten Bauteil und der Putzschicht herbeiführen.

## Patentansprüche

1. Abstandsgewebe, insbesondere Veloursgewebe, mit einer ersten Lage (1) und einer zweiten Lage (2) und die Lagen (1, 2) verbindenden Polfäden (4, 5, 6, 7), **dadurch gekennzeichnet, dass** zwischen den Lagen (1, 2) und angebunden an oder ausgehend von den frei flottierenden Polfäden (4, 5, 6, 7) in Schuß- und/oder Kettrichtung verlaufende Verzweigungen ausgebildet sind, welche, soweit sie gewebt sind, im Überkreuzungsbereich der Polfäden (4, 5, 6, 7) eingewebt sind, wodurch die freie Länge der Polfäden (4, 5, 6, 7) jeweils etwa halbiert ist.

2. Abstandsgewebe nach Anspruch 1, **dadurch gekennzeichnet, dass** von der Grundkette und/oder dem Schussmaterial Verzweigungen ausgehen oder daran angebunden sind.

3. Abstandsgewebe nach Anspruch 1 oder 2, **dadurch gekennzeichnet, dass** die Verzweigungen durch abstehende Fasern gebildet sind.

4. Abstandsgewebe nach Anspruch 1 oder 2, **dadurch gekennzeichnet, dass** die Verzweigungen durch auf den Fäden ausgebildete Noppen gebildet sind.

5. Abstandsgewebe nach Anspruch 1 oder 2, **dadurch gekennzeichnet, dass** die Verzweigungen durch an den Fäden ausgebildete Schlingen gebildet sind.

6. Abstandsgewebe nach einem der Ansprüche 1 bis 5, **dadurch gekennzeichnet, dass** die Fäden texturiert sind.

7. Abstandsgewebe nach einem der Ansprüche 1 bis 5, **dadurch gekennzeichnet, dass** die Fäden im Effektzwirnverfahren ausgebildet sind.

8. Abstandsgewebe nach einem der Ansprüche 1 bis 7, **dadurch gekennzeichnet, dass** die Zusatzschussfäden (3) durch vor und nach dem Schuss von oben nach untern und umgekehrt wechselnde Polfäden (4, 5, 6, 7) fixiert sind.

9. Abstandsgewebe, insbesondere Veloursgewebe, mit einer ersten Lage (1) und einer zweiten Lage (2) und die Lagen (1, 2) verbindenden Polfäden (4, 5, 6, 7) nach einem der Ansprüche 1 bis 8, **dadurch gekennzeichnet, dass** in einer oder beiden Lagen (1, 2), einer Außenfläche des Abstandsgewebe zugeordnet, Zusatzschussfäden (26) mit einer strukturierten Oberfläche eingewebt sind, bspw. Loopgarne, Schlingengarne, textuierte Garne oder ähnliche.

10. Abstandsgewebe nach Anspruch 9, **dadurch gekennzeichnet, dass** die für die Anbindung der Zusatzschussfäden (26) herangezogenen Zusatzkettfäden (25) in einer Lage des Abstandsgewebes mit einer strukturierten Oberfläche ausgebildet sind.

11. Bauteil auf Basis eines Abstandsgewebes, insbesondere eines Abstandsgewebes nach einem der Ansprüche 1 bis 10, vorzugsweise auf Basis eines Veloursgewebes, mit mindestens einer ersten und einer zweiten Lage (14, 15) und diese Lagen (14, 15) verbindenden Zwischenelementen (10, 11), wobei das Gewebe aus einem technischen Garn wie Aramidfaser, Keramikfaser, Kohlefaser oder insbesondere Glasfaser besteht und ausgehärtet verharzt ist und wobei weiter die Zwischenelemente (10. 11) starre Beabstandungselemente der ersten und der zweiten Lage (14, 15) bilden, **dadurch gekennzeichnet, dass** ausgehend von den Zwischenelementen (10, 11) Zweigelemente ausgebildet sind, welche im wesentlichen seitlich orientiert sind und Zwischenbrücken (12) zu einem benachbarten Zwischenelement (10, 11) bilden und dass die Basis für eine Zwischenbrücke (12) ein zwischen den Lagen eingewebter Zusatzkettfaden (8) oder ein Zusatzschussfaden (3) ist.

12. Bauteil nach Anspruch 11, **dadurch gekennzeichnet, dass** Basis für die Zwischenbrücken (12) an den Fäden ausgebildete Noppen, Schlingen oder dgl. sind.

13. Bauteil nach Anspruch 11 oder 12, **dadurch gekennzeichnet, dass** die Zwischenelemente (10, 11) Doppel-8-förmig ausgebildet sind.

14. Bauteil nach einem der Ansprüche 11 bis 13, wobei die Zwischenelemente (11) durch kreuzartige zueinander verlaufende Zwischenstege gebildet sind, **dadurch gekennzeichnet, dass** jeder Zwischensteg aus einer einen Spalt belassenden Doppelstruktur besteht.

15. Verfahren zur Ausbildung eines Bauteils auf Basis eines Abstandsgewebes, insbesondere eines Veloursgewebes, wobei durch Verharzung eine beabstandete, im wesentlichen starre Ausbildung erreicht wird, **dadurch gekennzeichnet, dass** die Verharzung durch Schmelzen von in das Grundsgerüst des Abstandsgewebes eingebrachten bzw. eingewebten zusätzlichen thermoplastischen Fasern durchgeführt wird und die eingelegten zusätzlichen Fasern sich zwischen den Lagen des Abstandsgewebes, im Bereich der frei flottierenden Polfäden, befinden.

16. Verfahren nach Anspruch 15, **dadurch gekennzeichnet, dass** eine Verharzung des Gewebes durch Aufschmelzen der zwischen den Lagen angeordneten zusätzlichen thermoplastischen Fasern von Inneren des Abstandsgewebes her vorgenommen wird.

## Claims

1. A woven spacer fabric, more particularly a woven velour fabric, having a first layer (1) and a second layer (2) and pile threads (4, 5, 6, 7) connecting the layers (1, 2), **characterized in that** between the layers (1, 2) and joined to or starting from the free floating pile threads (4, 5, 6, 7), there are formed, running in weft and/or warp direction, branches which, insofar as they are woven, are woven into the cross-over region of the pile threads (4, 5, 6, 7), thereby approximately halving the free length of the pile threads (4, 5, 6, 7) in each case.

2. A woven spacer fabric according to claim 1, **characterized in that** branches start from the ground warp and/or the weft material, or are joined thereto.

3. A woven spacer fabric according to claim 1 or 2, **characterized in that** the branches are formed by projecting fibres.

4. A woven spacer fabric according to claim 1 or 2, **characterized in that** the branches are formed by slubs formed on the threads.

5. A woven spacer fabric according to claim 1 or 2, **characterized in that** the branches are formed by loops formed on the threads.

6. A woven spacer fabric according to any one of claims 1 to 5, **characterized in that** the threads are textured.

7. A woven spacer fabric according to any one of claims 1 to 5, **characterized in that** the threads are formed by fancy twist method.

8. A woven spacer fabric according to any one of claims 1 to 7, **characterized in that** the additional weft threads (3) are fixed before and after the weft by pile threads (4, 5, 6, 7) alternating from above to below and below to above.

9. A woven spacer fabric, more particularly a woven velour fabric, having a first layer (1) and a second layer (2) and pile threads (4, 5, 6, 7) connecting the layers (1, 2) according to any one of claims 1 to 8, **characterized in that** additional weft threads (26) having a structured surface, for example loop yarns, frill yarns, textured yarns or the like, are woven into one or both of the layers (1, 2), assigned to an outer surface of the woven spacer fabric.

10. A woven spacer fabric according to claim 9, **characterized in that** the additional warp threads (25) used for securing the additional weft threads (26) are formed in a layer of the woven spacer fabric with a structured surface.

11. A structural component based on a woven spacer fabric, more particularly a woven spacer fabric according to any one of claims 1 to 10, preferably based on a woven velour fabric, having at least one first and one second layer (14, 15) and intermediate elements (10, 11) connecting these layers (14, 15), the woven fabric consisting of an industrial yarn such as aramid fibre, ceramic fibre, carbon fibre or, more particularly, glass fibre and being resinified and cured and the intermediate elements (10, 11) furthermore forming rigid spacing elements for the first and second layers (14, 15), **characterized in that** starting from the intermediate elements (10, 11) there are formed branching elements which are substantially laterally oriented and form intermediate bridges (12) to an adjacent intermediate element (10, 11), and **in that** the basis for an intermediate bridge (12) comprises an additional warp thread (8) or an additional weft thread (3) woven between the layers.

12. A structural component according to claim 11, **characterized in that** the basis for the intermediate bridges (12) comprises slubs, loops or the like, formed on the threads.

13. A structural component according to claim 11 or 12, **characterized in that** the intermediate elements (10, 11) have a double figure 8 shape.

14. A structural component according to any one of claims 11 to 13 wherein the intermediate elements (11) are formed by intermediate webs running crosswise relative to each other, **characterized in that** each intermediate web consists of a double structure leaving a gap.

15. A method of forming a structural component based on a woven spacer fabric, more particularly a woven velour fabric, wherein a spaced-apart, substantially rigid form is achieved by resinification, **characterized in that** the resinification is effected by melting additional thermoplastic fibres introduced or more precisely woven into the ground scaffold of the woven spacer fabric and the incorporated additional fibres are situated between the layers of the woven spacer fabric, in the region of the freely floating pile threads.

16. A method according to claim 15, **characterized in that** a resinification of the woven fabric is effected by melting the additional thermoplastic fibres disposed between the layers from the interior of the woven spacer fabric.

## Revendications

1. Tissu double couche, en particulier tissu velours, présentant une première couche (1) et une deuxième couche (2) ainsi que des fils de poil (4, 5, 6, 7) qui relient les couches (1, 2),
**caractérisé en ce que**
des ramifications qui s'étendent dans la direction de la trame et/ou la direction de la chaîne sont formées entre les couches (1, 2) et sont liées aux fils de poil (4, 5, 6, 7) qui flottent librement ou partent de ces derniers et, lorsqu'elles sont tissées, sont tissées dans la zone de croisement des fils de poil (4, 5, 6, 7), ce qui divise sensiblement par deux la longueur libre de chacun des fils de poil (4, 5, 6, 7).

2. Tissu double couche selon la revendication 1, **caractérisé en ce que** les ramifications partent de la chaîne de base et/ou du matériau de trame ou y sont liées.

3. Tissu double couche selon la revendication 1 ou 2, **caractérisé en ce que** les ramifications sont formées par des fibres qui débordent.

4. Tissu double couche selon la revendication 1 ou 2, **caractérisé en ce que** les ramifications sont formées par des reliefs formés sur les fils.

5. Tissu double couche selon la revendication 1 ou 2, **caractérisé en ce que** les ramifications sont formées par des boucles formées sur les fils.

6. Tissu double couche selon l'une des revendications 1 à 5, **caractérisé en ce que** les fils sont texturés.

7. Tissu double couche selon l'une des revendications 1 à 5, **caractérisé en ce que** les fils sont formés par un procédé de torsadage à effet.

8. Tissu double couche selon l'une des revendications 1 à 7, **caractérisé en ce que** des fils supplémentaires de trame (3) sont fixés par des fils de poil (4, 5, 6, 7) qui alternent entre le haut et le bas et inversement avant et après le fil de trame.

9. Tissu double couche, en particulier tissu velours, présentant une première couche (1) et une deuxième couche (2) ainsi que des fils de poil (4, 5, 6, 7) qui relient les couches (1, 2) selon l'une des revendications 1 à 8, **caractérisé en ce que** des fils supplémentaires de trame (26) à surface structurée, par exemple des fils à boucles, des fils texturés ou similaires, sont tissés dans une ou les deux couches (1, 2) d'une surface extérieure du tissu double couche.

10. Tissu double couche selon la revendication 9, **caractérisé en ce que** les fils supplémentaires de chaîne (25) qui interviennent dans le liage des fils supplémentaires de trame (26) dans une couche du tissu double couche sont configurés avec une surface structurée.

11. Composant à base d'un tissu double couche, en particulier d'un tissu double couche selon l'une des revendications 1 à 10, de préférence à base d'un tissu velours, qui présente au moins une première et une deuxième couche (14, 15) et des éléments intermédiaires (10, 11) qui relient ces couches (14, 15),
le tissu étant constitué d'un fil technique, par exemple en fibres d'aramide, en fibres de céramique, en fibres de carbone ou en particulier en fibres de verre et étant durci par résine,
les éléments intermédiaires (10, 11) formant en outre des éléments d'écartement rigides entre la première et la deuxième couche (14, 15),
**caractérisé en ce que**
des éléments ramifiés qui sont orientés essentiellement latéralement et qui forment des ponts intermédiaires (12) avec un élément intermédiaire (10, 11) voisin sont formés à partir des éléments intermédiaires (10, 11) et **en ce que** la base d'un pont intermédiaire (12) est un fil supplémentaire de chaîne (8) ou un fil supplémentaire de trame (3) tissé entre les couches.

12. Composant selon la revendication 11, **caractérisé en ce que** la base des ponts intermédiaires (12) est constituée de reliefs, de boucles ou similaires formés sur les fils.

13. Composant selon la revendication 11 ou 12,
**caractérisé en ce que** les éléments intermédiaires (10, 11) sont configurés en forme de double 8.

14. Composant selon l'une des revendications 11 à 13, dans lequel les éléments intermédiaires (11) sont formés par des entretoises qui s'étendent en croix les unes par rapport aux autres, **caractérisé en ce que** chaque entretoise est constituée d'une structure double qui laisse un interstice.

15. Procédé de formation d'un composant basé sur un tissu double couche, en particulier un tissu velours, dans lequel on obtient une configuration essentiellement rigide et double couche par imprégnation par résine,
**caractérisé en ce que**
l'imprégnation par résine est réalisée par fusion de fibres thermoplastiques supplémentaires placées ou tissées dans le treillis de base du tissu double couche et les fibres supplémentaires insérées sont situées entre les couches du tissu double couche dans la zone occupée par les fils de poil qui flottent librement.

16. Procédé selon la revendication 15, **caractérisé en ce que** l'imprégnation du tissu par résine est réalisée par fusion des fibres thermoplastiques supplémentaires disposées entre les couches, partant de l'intérieur du tissu double couche.
